# EUROPEAN PATENT APPLICATION

(11) **EP 4 696 562 A1**
(43) Date of publication of application: **18.02.2026**
(21) Application number: 25193440.2
(22) Date of filing: 01.08.2025
(51) Int. Cl.: B60R 16/02, B60R 16/03, H02G 5/00

(54) **BUS BAR AND ELECTRICAL CONNECTION BOX**

(30) Priority: 14.08.2024 JP 2024135199
(71) Applicant: Yazaki Corporation, Tokyo 108-0075 (JP)
(72) Inventor: Nagata, Daiki, Kakegawa-shi, Shizuoka 437-1421 (JP); Hashimoto, Yuki, Kakegawa-shi, Shizuoka 437-1421 (JP)
(74) Representative: Grünecker Patent- und Rechtsanwälte PartG mbB

(57) **Abstract**

A bus bar (1) includes a plate-shaped bus bar body (10) provided with a plurality of connection portions (11) electrically connected to bus bars (100, 200) as connection partners being provided as connection portions (11a, 11b), a first protrusion (21) provided to protrude from one side plate face (10a) of the bus bar body (10), and a second protrusion (22) provided to protrude from the other side plate face (10b) of the bus bar body (10). The bus bar body (10) has a recess (12), and in a normal attachment posture in which the bus bar body (10) is attached to an electrical connection box (50) as an installation target (50) having a rib (52) as a projection, the recess (12) and the rib (52) are engaged.

## Description

### BACKGROUND OF THE INVENTION

### 1. Field of the Invention

The present invention relates to a bus bar and an electrical connection box.

### 2. Description of the Related Art

As a technique related to a bus bar and an electrical connection box in the related art, for example, JP 2006 - 050 830 A discloses a bus bar including a main body bus bar formed by punching a conductive metal plate along a circuit pattern, and a separate auxiliary bus bar stacked and fixed to a portion of the main body bus bar where punching cannot be performed with a required circuit width, in which the auxiliary bus bar is welded and integrated with the main body bus bar. The main body bus bar is provided with a protrusion for welding.

Such a bus bar may be formed in a flat plate shape by press punching, for example. Such a bus bar has room for further improvement in a configuration for improving assembly work efficiency.

### SUMMARY OF THE INVENTION

The present invention has been made in view of the above circumstances, and an object of the present invention is to provide a bus bar and an electrical connection box capable of appropriately achieving improvement in assembly work efficiency.

In order to achieve the above mentioned object, a bus bar according to one aspect of the present invention includes a plate-shaped bus bar body having a plurality of connection portions electrically connected to connection partners; a first protrusion provided to protrude from one side plate face of the bus bar body; and a second protrusion provided to protrude from the other side plate face of the bus bar body, wherein the bus bar body has one of a recess or a projection, and the recess and the projection are engaged in a normal attachment posture in which the bus bar body is attached to an installation target having the other of the recess or the projection.

In order to achieve the above mentioned object, an electrical connection box according to another aspect of the present invention includes a housing including a rib provided inside; and a bus bar attached in the housing, wherein the bus bar includes a plate-shaped bus bar body having a plurality of connection portions electrically connected to connection partners, a first protrusion provided to protrude from one side plate face of the bus bar body, and a second protrusion provided to protrude from the other side plate face of the bus bar body, the bus bar body has a recess, and the recess and the rib are engaged in a normal attachment posture in which the bus bar body is attached to the housing.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a perspective view illustrating a schematic configuration of a bus bar according to an embodiment;
FIG. 2 is a plan view illustrating a schematic configuration of the bus bar according to the embodiment in a state where the bus bar is attached to the electrical connection box in a normal attachment posture;
FIG. 3 is a cross-sectional view taken along line III-III of FIG. 2;
FIG. 4 is a side view illustrating a state in which the bus bars according to the embodiment are overlapped;
FIG. 5 is a plan view for comparison illustrating a schematic configuration of a state in which a bus bar not provided with a recess is attached to an electrical connection box; and
FIG. 6 is a view for comparison, illustrating a schematic configuration of a state in which the bus bar not provided with the recess is attached to the electrical connection box, and is a cross-sectional view corresponding to a III-III cross section of FIG. 2.

### DETAILED DESCRIPTION OF THE PREFERRED EMBODIMENTS

Hereinafter, an embodiment according to the present invention will be described in detail with reference to the drawings. Note that the present invention is not limited by the embodiment. In addition, constituent elements in the following embodiment include those that can be easily replaced by those skilled in the art, or those that are substantially the same.

### Embodiment

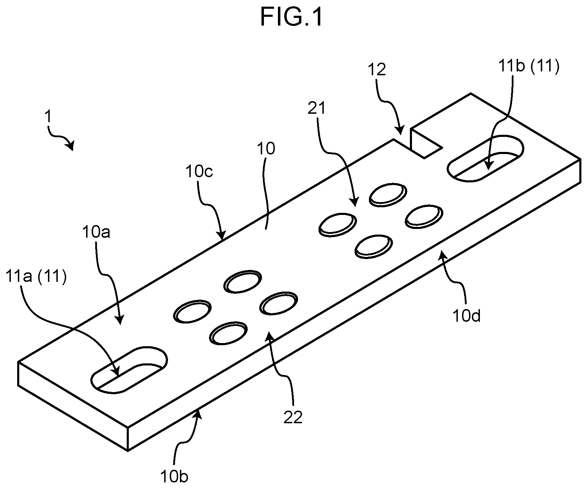

A bus bar 1 of the present embodiment illustrated in FIG. 1 includes a bus bar body 10 formed in a rectangular flat plate shape. The bus bar body 10 is formed by subjecting a predetermined portion of a sheet metal material having conductivity to press working such as punching. The bus bar body 10 is provided with a plurality of connection portions 11 electrically connected to a connection partner to which the bus bar body 10 is connected. In the present embodiment, the bus bar body 10 has a connection portion 11a as a first connection portion on one side of the bus bar body 10 in the longitudinal direction, and a connection portion 11b as a second connection portion on the other side. In the present embodiment, the connection portions 11a and 11b are formed as long holes that penetrate the bus bar body 10 and are elongated in the longitudinal direction of the bus bar body 10.

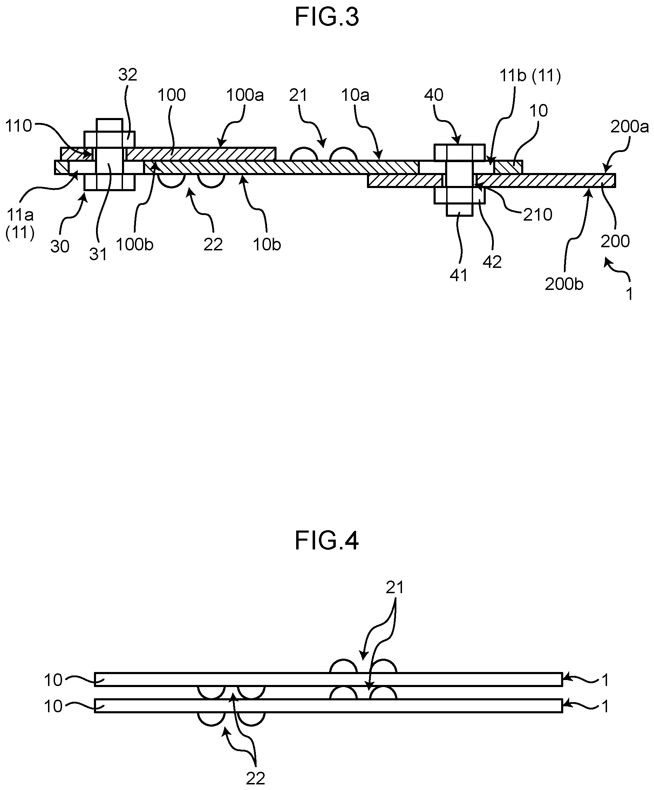

The bus bar body 10 has a flat one side plate face 10a and the other side plate face 10b opposite to the one side plate face 10a. The one side plate face 10a of the bus bar body 10 is provided with a plurality of first protrusions 21 provided to protrude from the one side plate face 10a. The other side plate face 10b of the bus bar body 10 is provided with a plurality of second protrusions 22 provided to protrude from the other side plate face 10b (see also FIG. 3). Four first protrusions 21 and four second protrusions 22 are provided. Each of the four first protrusions 21 and the four second protrusions 22 is disposed so that each of the first protrusions 21 and the second protrusions 22 is located at the top of the quadrangle. The first protrusion 21 and the second protrusion 22 can be integrally formed with the bus bar body 10 by press working, for example. Although details will be described later, the second protrusion 22 is provided so as to overlap a projection region S. The projection region S is a region where a bus bar 100 in a state where the bus bar 100 is connected to the connection portion 11a on the one side plate face 10a of the bus bar body 10 is projected on the other side plate face 10b of the bus bar body 10.

The bus bar body 10 has a recess 12 at one side edge 10c on of edges 10c and 10d along the longitudinal direction of the bus bar body 10. The recess 12 is formed in a cutout shape cut into the edge 10c of the bus bar body 10 from the outside. The position of the recess 12 along the longitudinal direction of the bus bar body 10 is located between the first protrusion 21 and the other side connection portion 11b. Accordingly, for example, in a case where the bus bar body 10 is assembled with the one side plate face 10a facing upward, the recess 12 is disposed closer to the connection portion 11b where a bus bar 200 is connected to the other side plate face 10b of the bus bar body 10 than the first protrusion 21 which is easily seen from above, so that the work efficiency of assembly can be further improved.

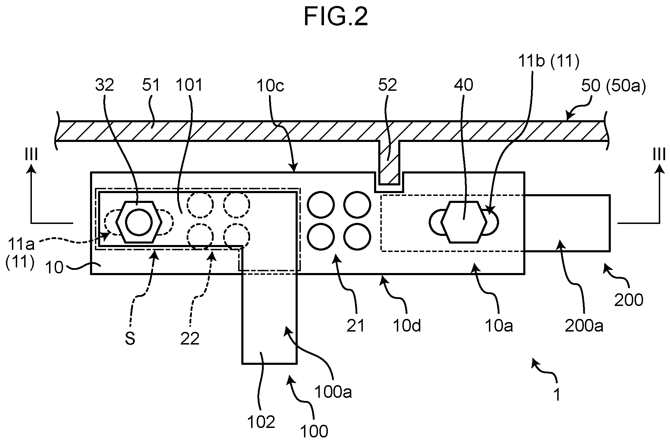

For example, as illustrated in FIG. 2, the bus bar 1 can be attached in a housing 50a of an electrical connection box 50 as an installation target. Here, although not illustrated, the housing 50a of the electrical connection box 50 is formed in a substantially box shape made of an insulating resin material or the like, and includes insulating walls which are a top plate, a bottom plate, side plates provided on a back face or a side face, or the like. In FIG. 2, an insulating wall 51 constituting the housing 50a is illustrated. The insulating wall 51 is provided with a rib 52 as a projection protruding to the inside of the housing 50a. The rib 52 is formed long in a direction perpendicular to the paper surface together with the insulating wall 51. The bus bar 1 is attached in the housing 50a of the electrical connection box 50 so that the recess 12 of the bus bar body 10 is engaged with the rib 52 of the electrical connection box 50. In other words, the bus bar 1 is attached in the housing 50a of the electrical connection box 50 in a normal attachment posture which is an attachment posture in which the recess 12 of the bus bar body 10 and the rib 52 of the electrical connection box 50 are engaged with each other.

The electrical connection box 50 is mounted on a vehicle such as an automobile and incorporated in a wire harness, for example. The wire harness is configured so that a plurality of routing members used for power supply and signal communication is bundled to form a collective component, and the plurality of routing members W is connected to each device by a connector or the like, for example, for connection between devices mounted on a vehicle. In addition to the above configuration, the electrical connection box 50 includes electronic components such as a connector, a relay, a fuse, a capacitor, a branch portion, various bus bars, and an electronic control unit, and these components are collectively housed in the housing 50a. The electrical connection box 50 is connected between a power source such as a battery and various electronic devices attached in the vehicle via, for example, a routing member or the like. The electrical connection box 50 distributes power supplied from a power supply to various electronic devices in the vehicle. The electrical connection box 50 may also be referred to as a junction box, a fuse box, a relay box, or the like, but these are collectively referred to as an electrical connection box in the present embodiment.

When the bus bar 1 is attached to the electrical connection box 50 in the normal attachment posture, the connection portion 11a of the bus bar 1 is connected to the bus bar 100 as a first connection partner which is a connection partner. Here, the bus bar 100 is made of a sheet metal material having conductivity, and has a substantially L-shaped plate shape including a substantially elongated rectangular first bus bar body 101 and a substantially elongated rectangular second bus bar body 102 extending from the other side end portion of the first bus bar body 101 perpendicularly to the direction in which the first bus bar body 101 extends. The bus bar 100 has a connection portion 110 which is a circular through-hole in the vicinity of one side end portion of the first bus bar body 101. The bus bar 100 has one side plate face 100a and the other side plate face 100b of the bus bar 100. The one side plate face 100a and the other side plate face 100b are both formed flat. A shaft 31 of a bolt 30 is inserted into both the connection portion 11a of the bus bar 1 and the connection portion 110 of the bus bar 100, and a nut 32 is screwed and tightened into the shaft 31 to connect the bus bar 1 and the bus bar 100. The bus bar 100 is electrically connected to the bus bar 1 with the other side plate face 100b of the bus bar 100 contacting the one side plate face 10a of the bus bar body 10.

On the other hand, the connection portion 11b of the bus bar 1 is connected to the bus bar 200 as a second connection partner which is a connection partner. The bus bar 200 is made of a sheet metal material having conductivity, and is formed in a substantially long rectangular plate shape. The bus bar 200 has a connection portion 210 which a circular through-hole in the vicinity of one side end portion. The bus bar 200 has one side plate face 200a and the other side plate face 200b of the bus bar 200. The one side plate face 200a and the other side plate face 200b are both formed in a flat shape. A shaft 41 of a bolt 40 is inserted into both the connection portion 11b of the bus bar 1 and the connection portion 210 of the bus bar 200, and a nut 42 is screwed and tightened into the shaft 41 to connect the bus bar 1 and the bus bar 200. The bus bar 200 is connected to the bus bar 1 with the one side plate face 200a of the bus bar 200 contacting the other side plate face 10b of the bus bar body 10.

The bus bar 1 described above includes the plate-shaped bus bar body 10 provided with a plurality of connection portions 11 electrically connected to the bus bars 100, 200 as connection partners being provided as the connection portions 11a and 11b, the first protrusion 21 provided to protrude from the one side plate face 10a of the bus bar body 10, and the second protrusion 22 provided to protrude from the other side plate face 10b of the bus bar body 10. The bus bar body 10 has the recess 12, and in a normal attachment posture in which the bus bar body 10 is attached to the electrical connection box 50 as an installation target having the rib 52 as a projection, the recess 12 and the rib 52 are engaged. The electrical connection box 50 includes the housing 50a, and the bus bar 1 is attached in the housing 50a.

The bus bar 1 is shipped with, for example, a large number of bus bars 1 being packed in one shipping box. According to the bus bar 1 of the present embodiment, even when a large number of bus bars 1 are packed in one box, as illustrated in FIG. 4, even in a state where the bus bars 1 are stacked, the first protrusions 21 and the second protrusions 22 reduce contact between the flat plate faces of the bus bars 1, thereby reducing adhesion between the bus bars 1. Therefore, the work of peeling off the adhered bus bar 1 at the time of attaching the bus bar 1 is reduced, and the work efficiency of the assembly can be appropriately improved. In addition, the worker can easily recognize the normal attachment posture by the recess-projection engagement between the recess 12 and the rib 52 as the projection, so that the work efficiency of the assembly can be further improved.

Further, in a case where the bus bar 100 is connected to the connection portion 11a of the bus bar 1 on the one side plate face 10a of the bus bar body 10 in the normal attachment posture of the attachment posture of the bus bar 1 to the electrical connection box 50, the bus bar 1 does not interfere with the first protrusion 21. Similarly, in a case where the bus bar 200 is connected to the connection portion 11b of the bus bar 1 on the other side plate face 10b of the bus bar body 10 in the normal attachment posture of the attachment posture of the bus bar 1 to the electrical connection box 50, the bus bar 1 does not interfere with the second protrusion 22.

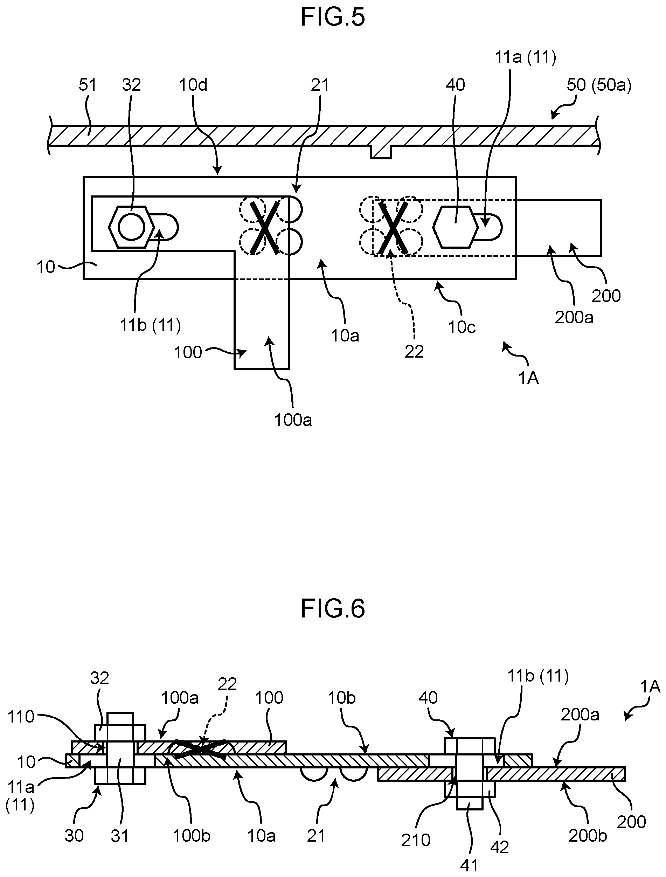

In a case of a bus bar 1A not provided with the recess 12, erroneous assembly illustrated in FIG. 5 may occur. That is, for the bus bar 100 and the bus bar 1A, the connection portion 110 of the bus bar 100 and the connection portion 11b of the bus bar 1A are connected on the one side plate face 10a of the bus bar body 10. For the bus bar 200 and the bus bar 1A, the connection portion 210 of the bus bar 200 and the connection portion 11a of the bus bar 1A are connected on the other side plate face 10b of the bus bar body 10. Here, the arrangement of the bus bar 1A illustrated in FIG. 5 is equivalent to that obtained by rotating the bus bar 1 of FIG. 2 by 180 degrees around an axis perpendicular to the paper surface. When erroneous assembly as illustrated in FIG. 5 occurs, the bus bar 100 interferes with the first protrusion 21 and the bus bar 200 interferes with the second protrusion 22 as indicated by "X" marks in FIG. 5. Therefore, there is a possibility that the bus bar 1A and the bus bar 100, 200 are not electrically connected. However, in the bus bar 1 of the present embodiment, since the worker can easily recognize the normal attachment posture in which the recess 12 of the bus bar body 10 and the rib 52 of the electrical connection box 50 are engaged with each other, erroneous assembly of the bus bar 1 as illustrated in FIG. 5 is reduced.

The other side plate face 10b of the bus bar body 10 has the projection region S as a region on which the bus bar 100 is projected in a state where the bus bar 100 is connected to the connection portion 11a of the bus bar body 10 on the one side plate face 10a, and the second protrusion 22 is provided to overlap the projection region S.

In a case of the bus bar 1A not provided with the recess 12, erroneous assembly illustrated in FIG. 6 may occur. That is, for the bus bar 100 and the bus bar 1A, the bus bar 100 is connected by the connection portion 110 of the bus bar 100 and the connection portion 11a of the bus bar 1A from the other side plate face 10b of the bus bar 1A so that the other side plate face 100b of the bus bar 100 and the other side plate face 10b of the bus bar 1A contact each other. For the bus bar 200 and the bus bar 1A, the bus bar 200 is connected by the connection portion 210 of the bus bar 200 and the connection portion 11b of the bus bar 1A from the one side plate face 10a of the bus bar 1A so that the one side plate face 200a of the bus bar 200 and the one side plate face 10a of the bus bar 1A contacts each other. Here, the arrangement of the bus bar 1A illustrated in FIG. 6 is equivalent to that in which the bus bar 1 of FIG. 3 is turned upside down. When erroneous assembly as illustrated in FIG. 6 occurs, the bus bar 100 interferes with the second protrusion 22 as indicated by an "X" mark in FIG. 6. However, also in this case, in the bus bar 1 of the present embodiment, since the worker can easily recognize the normal attachment posture in which the recess 12 of the bus bar body 10 and the rib 52 of the electrical connection box 50 are engaged with each other, erroneous assembly of the bus bar 1 as illustrated in FIG. 6 is reduced.

As described above, in the bus bar 1, the adhesion of the bus bars 1 to each other is reduced, and the recess 12 is engaged with the projection such as the rib 52 of the electrical connection box 50, so that the assembly worker can easily recognize the normal attachment posture. In the electrical connection box 50, while the electrical connection box 50 is configured so that the attachment of the bus bar 1 in the normal attachment posture can be easily recognized, the rib 52 is used as the rib 52 for reinforcing the insulating wall 51 in the housing 50a of the electrical connection box 50, and the rigidity of the electrical connection box 50 can be increased.

Note that the bus bar according to the embodiment of the present invention described above is not limited to the embodiment described above, and various modifications can be made within the scope described in the claims.

In the above description, the bus bar 1 includes the recess 12 and engages with the rib 52 of the electrical connection box 50 as the projection, but for example, the projection may be provided on the bus bar 1 and the recess may be provided on the electrical connection box 50. That is, it is sufficient that the bus bar body 10 of the bus bar 1 has one of the recess or the projection, and the installation target (the electrical connection box 50) is provided with the other of the recess or the projection.

In addition, the electrical connection box 50 as an installation target of the bus bar 1 is an example, and the bus bar 1 may be installed and assembled to another installation target. The number and the arrangement of the first protrusions 21 and the second protrusions 22 can be appropriately set. In the present embodiment, the first protrusion 21 and the second protrusion 22 are integrally formed with the bus bar body 10 by press working, but may be formed separately. In the present embodiment, the bus bars 100, 200 are used as connection partners of the bus bar 1, but the present invention is not limited thereto, and another electric device may be used. Further, regardless of the present embodiment, the bus bar 1 may have, for example, three or more connection portions 11, and may be configured to be electrically connected to three or more connection partners.

The bus bar according to the present embodiment may be configured by appropriately combining the components of the embodiment and the modifications described above.

The bus bar and the electrical connection box according to the present embodiment have an effect of appropriately achieving improvement in assembly work efficiency.

## Claims

1. A bus bar (1) comprising:
a plate-shaped bus bar body (10) having a plurality of connection portions (11) electrically connected to connection partners (100, 200);
a first protrusion (21) provided to protrude from one side plate face (10a) of the bus bar body (10); and
a second protrusion (22) provided to protrude from the other side plate face (10b) of the bus bar body (10), wherein
the bus bar body (10) has one of a recess (12) or a projection, and
the recess (12) and the projection (52) are engaged in a normal attachment posture in which the bus bar body (10) is attached to an installation target (50) having the other of the recess or the projection (52).

2. The bus bar (1) according to claim 1, wherein
in the normal attachment posture,
a first connection partner (100) of the connection partners (100, 200) does not interfere with the first protrusion (21) in a case where the first connection partner (100) is connected to a first connection portion (11a) of the connection portions (11) on the one side plate face (10a), and
a second connection partner (200) of the connection partners (100, 200) does not interfere with the second protrusion (22) in a case where the second connection partner (200) is connected to a second connection portion (11b) of the connection portions (11) on the other side plate face (10b).

3. The bus bar (1) according to claim 1 or 2, wherein
the other side plate face (10b) has a projection region (S) as a region on which a first connection partner (100) of the connection partners (100, 200) is projected in a state where the first connection partner (100) is connected to a first connection portion (11a) of the connection portions (11) on the one side plate face (10a), and
the second protrusion (22) is provided to overlap the projection region (S).

4. An electrical connection box (50) comprising:
a housing (50a) including a rib (52) provided inside; and
a bus bar (1) attached in the housing (50a), wherein
the bus bar (1) includes a plate-shaped bus bar body (10) having a plurality of connection portions (11) electrically connected to connection partners (100, 200), a first protrusion (21) provided to protrude from one side plate face (10a) of the bus bar body (10), and a second protrusion (22) provided to protrude from the other side plate face (10b) of the bus bar body (10),
the bus bar body (10) has a recess (12), and
the recess (12) and the rib (52) are engaged in a normal attachment posture in which the bus bar body (10) is attached to the housing (50a).
